# EUROPEAN PATENT APPLICATION

(11) **EP 2 447 060 A1**
(43) Date of publication of application: **02.05.2012**
(21) Application number: 11004575.4
(22) Date of filing: 06.06.2011
(51) Int. Cl.: B32B 29/00, B32B 7/12, B65D 30/08, D21H 27/32

(54) **Bag made of composite material and method for its manufacture**

(30) Priority: 02.11.2010 IT AN20100188
(71) Applicant: SACART S.p.a., 60019 Senigallia (AN) (IT)
(72) Inventor: Fiorini, Giovanni, 60019 Senigallia AN (IT); Piergiovanni, Lorenzo, 60019 Cesano di Senigallia AN (IT)
(74) Representative: Cacciamani, Clizia

(57) **Abstract**

Bag made of a composite material, comprising at least one layer of cellulosic material such as paper or the like, onto which at least one layer of water-soluble polymer material is directly applied and adhered, and method for the manufacture of said bag.

## Description

The present invention relates to bags made of composite material for the packing and storage of particulate and/or powdery materials, and in particular relates to bags generally used to contain products in the form of powder or granules like concrete, pre-mixed materials for building, minerals, chemicals, seeds and animal feed.

Currently, bags designed for the above-mentioned purposes are generally made using one or more layers of paper and one or more layers of protective material, particularly that capable of forming a barrier against humidity. Normally, the protective material comprises a plastics material, such as PE, PET, PVC or the like, which is connected to the layer of paper in various ways. In this case, the problem lies in the fact that the composite material thus made must be disposed of taking into account the various disposal requirements. In the specific case of products used for building, such as concrete, pre-mixed materials and the like, it would be highly advantageous to be able to introduce a material capable of providing adequate protection against humidity while at the same time being water-soluble, so that it can be introduced directly into the mixer, concrete mixer or the like, into which the product contained in the bag is fed. Once the bag is completely dissolved in aqueous solution, the solid residue of the bag will be composed of cellulose fibres varying in length from a few microns to 4-5 mm, therefore creating no problems from the environmental impact point of view.

For this purpose, the use of polyvinyl alcohol (hereinafter referred as PVA) has been considered. This polymer is universally used due to its excellent resistance to fats, oils and solvents and its ability to act as a barrier to gases. A bag produced by connecting at least one layer of paper to one layer of PVA film has excellent characteristics from the point of view of resistance to external agents, but its mechanical properties, substantially different from those of the paper to which it is connected, make the production of bags formed simply by superimposing paper and PVA film somewhat problematic; in fact, such bags present flatness problems as a result of these different mechanical properties.

The purpose of the present invention is therefore to provide a bag made of composite material that is capable of providing the product to be contained in said bag with sufficient protection from external agents, such as gas and humidity, which is completely water-soluble so as to ensure that its disposal will have a low environmental impact, and which can at the same time be produced simply and with a good shape. Another purpose of the invention is a method for manufacturing a bag that meets to the above-described requirements.

The object of the present invention is therefore a bag made of composite material, comprising at least one layer of cellulosic material, such as paper or the like, onto which is directly applied, and adhered, at least one layer of water-soluble polymer material, in particular polyvinyl alcohol.

The thickness of the layer of water-soluble polymer material will preferably be in the order of 0.5 to 100 µm, and in particular 10 to 50 µm. In a preferred embodiment, said bag comprises up to five layers of cellulosic material, of which at least one is connected to a layer of water-soluble polymer material adhered to it.

Preferably, said layer of polymer material is produced by directly depositing an aqueous solution of the water-soluble polymer material. The concentration of the polymer in aqueous solution can vary between 4% and 40% by weight The aqueous solution can contain additives such as low- molecular-weight polyalcohols, polyethylene glycols and polypropylene glycols or other organic additives capable of changing the viscosity, preventing the formation of bubbles or changing the mechanical properties of the finished product.

Another object of the present invention is a method for manufacturing a bag made of composite material involving a stage of depositing one or more layers of a solution of water-soluble polymer material in aqueous solution onto a layer of cellulosic material, such as paper or the like, cutting the element thus obtained into single elements and forming it into a tube shape, and sealing the bottom of the bag.

In a preferred embodiment, the depositing stage is performed by a flexographic printing machine provided with a plurality of stations for depositing the water-soluble polymer material.

Further features and advantages of the present invention will emerge from the following detailed description of an embodiment.

The bag according to the present invention is made using one or more layers of virgin fibre paper (white or Havana) with a degree of repulpability tested and determined in accordance with Standard UNI EN ISO 5263-1 (Wet Disintegration of Paper Pulp). The tube, from which the bag is later formed, can be made by joining together up to five layers of paper, and preferably by depositing on at least one of the said layers a layer of water-soluble polymer material, and in particular polyvinyl alcohol. Indeed, as previously mentioned above, this polymer acts as an excellent barrier to gases and solvents. It is completely water-soluble, and preferably used in a formulation with a degree of hydrolysis of between 70 and 99%, typically 88%, with molecular weights of between 10,000 and 300,000 g/mol.

The polymer concentration in aqueous solution can vary between 4% and 40% by weight. The aqueous solution can contain additives such as low-molecular-weight polyalcohols and polyethylene glycols and polypropylene glycols or other organic additives capable of changing the viscosity, preventing the formation of bubbles or changing the mechanical properties of the finished product.

According to the method of the present invention, the aqueous solution is applied onto the surface of the paper using a flexographic printing machine, of a known type, which normally comprises a system comprising two or more rollers for depositing the polymer material, arranged in series, in a device that includes a transit station in a temperature-controlled environment after each polymer material mixture depositing station. This configuration allows a plurality of layers of polymer material to be deposited substantially contemporaneously, with clear savings in production times. Moreover, this type of solution allows the thicknesses of PVA spread over the layer of paper to be very precisely controlled, given that the operation can be repeated several times and the amount of polymer material to be deposited can be appropriately set. The PVA will be in aqueous solution with a concentration of between 4% and 40% by weight; varying the concentration will of course affect the amount of PVA deposited at each depositing pass. Generally, the thickness of the PVA layer will be no less than 0.5 µm and no more than 100 µm; in fact, thicknesses of less than 0.5 µm would not guarantee the required effectiveness of the protection, and thicknesses of more than 100 µm could present problems as regards the mechanical properties of the resulting composite.

Once the required thickness of polyvinyl alcohol is obtained on the layer or layers of paper, the composite thus obtained can first be prepared in a tubular configuration and then one or both ends can be sealed if a bag with a valve fitted at the bottom is to be made. Any printing on the paper must of course be done using water-soluble inks and the adhesives used to form the tube and seal the ends of the bag must also be water-soluble.

The bag thus contrived is made in a very simple and convenient way and provides excellent performance as regards the protection afforded to the material contained in the bag; moreover, the bag is completely water-soluble and can therefore be easily disposed of.

## Claims

1. Bag made of a composite material, comprising at least one layer of cellulosic material, such as paper or the like, onto which is directly applied, and adhered, at least one layer of water-soluble polymer material.

2. Bag made of a composite material according to claim 1, wherein the thickness of the layer of water-soluble polymer material is in the order of 0.5 to 100 µm, and in particular 10 to 50 µm.

3. Bag made of a composite material according to claim 1 or 2, wherein said bag comprises up to five layers of cellulosic material, of which at least one is connected to a layer of water-soluble polymer material adhered to it.

4. Bag according to any one of the preceding claims 1 to 3, wherein said layer of polymer material is formed by directly depositing an aqueous solution of the water-soluble polymer material.

5. Bag according to any one of the preceding claims 1 to 4, wherein said water-soluble polymer material is polyvinyl alcohol.

6. Bag according to claims 4 and 5, wherein the concentration of polyvinyl alcohol in aqueous solution is between 4% and 40% by weight.

7. Bag according to claim 6, wherein the aqueous solution contains additives such as low-molecular-weight polyalcohols, polyethylene glycols, polypropylene glycols or other organic additives capable of changing the viscosity, preventing the formation of bubbles or changing the mechanical properties of the finished product.

8. Method for manufacturing a bag made of composite material, involving a stage of depositing one or more layers of a solution of a water-soluble polymer material In aqueous solution onto a layer of a cellulosic material, such as paper or the like, cutting the element thus obtained into single elements and forming it into a tube shape, and sealing the bottom of the bag or both ends if the bag is fitted with a valve.

9. Method according to claim 8, wherein the depositing stage is performed by a flexographic printing machine provided with a plurality of stations for depositing the water-soluble polymer material.
